# EUROPEAN PATENT APPLICATION

(11) **EP 2 523 454 A1**
(43) Date of publication of application: **14.11.2012**
(21) Application number: 10840319.7
(22) Date of filing: 04.01.2010
(51) Int. Cl.: H04N 7/173

(54) **EDGE CONTENT DELIVERY APPARATUS AND CONTENT DELIVERY NETWORK FOR THE INTERNET PROTOCOL TELEVISION SYSTEM**

(71) Applicant: Alcatel Lucent, 75007 Paris (FR)
(72) Inventor: LV, Xuehua, Shanghai 201206 (CN); DAVE, Robinson, Cecil, Wiltshire (GB); KISEL, Andrey, Berkshire (GB); BAO, Hongqiang, Shanghai 201206 (CN)
(74) Representative: MERH-IP Matias Erny Reichl Hoffmann
(86) International application number: PCT/CN2010/070003
(87) International publication number: WO 2011/079529

(57) **Abstract**

An edge content delivery device for an Internet Protocol TV (IPTV) system and corresponding content delivery system are disclosed. The edge content delivery device comprises: a requesting apparatus for requesting media contents from other edge content delivery devices; a receiving apparatus for receiving media contents distributed by a central content delivery device, for receiving media contents from the other edge content delivery devices, and for receiving media contents ingested directly from a content source of a content provider; a storage apparatus for storing the received media contents; a controlling apparatus for managing the stored media contents based on a predetermined content management policy; a deleting apparatus for deleting the media contents from the storage apparatus according to an instruction from the controlling apparatus; and a streaming apparatus for streaming the requested media contents to an end user according to an instruction from the controlling apparatus, and in response to a request from another edge content delivery device, delivering the requested media contents to the requesting edge content delivery device.

## Description

### Technical Field of the Invention

The present invention relates to an Internet Protocol TV (IPTV) system, more particularly, to an edge content delivery device in the IPTV system and a content delivery network containing such edge content delivery device.

### Background of the Invention

Currently, the IPTV system has been widely employed. IPTV, also referred to as Interactive Personality TV, is an Internet-based multimedia communication technology which utilizes an infrastructure of a broadband network and takes a home TV set or a personal computer as a display terminal to provide TV channel programs and other multimedia contents to an end user. The main feature of the IPTV lies in its interactivity and realtimeness.

In the IPTV system, distribution and management of media contents is an important technique. In a traditional content distribution method, an IPTV service provider receives the media contents from a content provider and stores the contents in a centralized storage (also referred to as a central storage server), and then the media contents are replicated throughout the system according to some policies such as predicated or observed popularity.

To enable the IPTV system to provide richer services, a new solution for IPTV has been developed. The first challenge is to develop an IPTV system solution which can be cost efficiently scaled for extra large deployments, e.g. to provide the IPTV service to more then 10,000,000 users. The second challenge is to find a flexible IPTV system solution that is capable of combining a traditional IPTV model with an IPTV "cloud" model. The IPTV "cloud" model means the IPTV service provider can provide a part of the platform capability to a third party, and the third party provides some regionalised IPTV services, e.g. create localised community Video on Demand catalogues etc.

However, the traditional content delivery network (CDN for short) is not suitable for the above new challenges.

The traditional content delivery network is a distributed content distribution network built on the IP network, and is in the form of central-edge server distribution. Usually, edge servers are disposed in an area or network where user accesses are relatively intensive, and a central server stores all the media contents. The central server distributes a portion of the media contents to the respective edge servers via a backbone network according to distribution policies, and then the media contents are provided to end users via the edge servers. For example, the most popular media contents are distributed to the edge servers, while the media contents with low popularity remain on the central server. Thus, it would be prone to happen that the same media contents are stored on multiple edge servers. When the end user is accessing, the access of the user is directed to an operational edge server that is closest to the user by means of a global load balancing technique, and the edge server directly responds to the user's request. If the edge server does not have the contents desired by the user, it will automatically grab the corresponding contents from the central server based on configuration and provide them to the user.

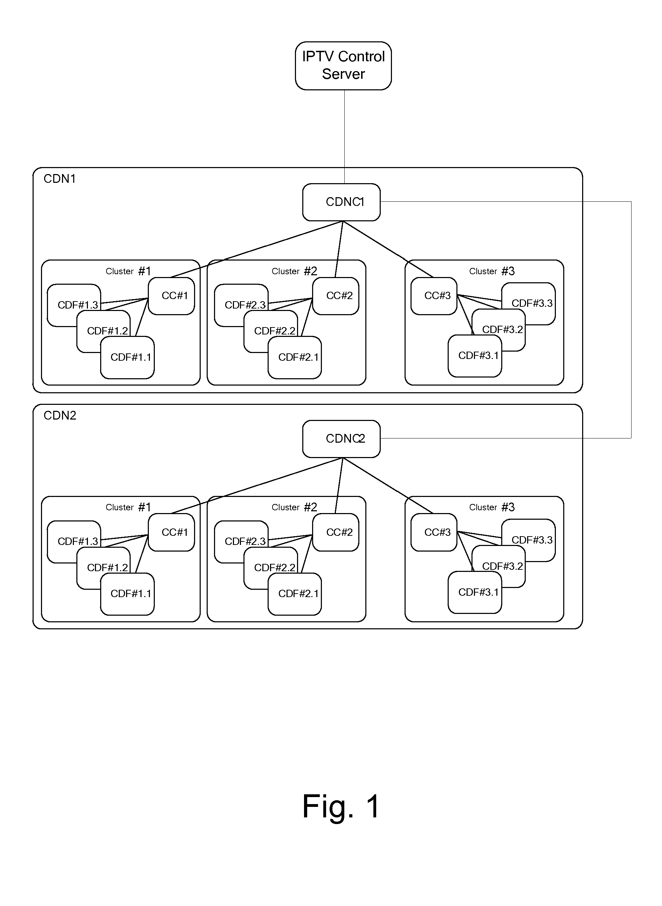

Fig.1 illustrates a schematic block diagram of an existing hierarchical content delivery network, which is disclosed in the IPTV Open Forum Functional Architecture (version 1.1). As shown in Fig.1, the IPTV control server is the central server storing all the media contents, and CDN1 and CDN2 represent the content delivery network in the different regions, respectively. Each content delivery network includes a CDN controller (CDNC), a content controller (CC) and a plurality of content delivery function (CDF) modules. A cluster comprising the content controller and the CDF modules forms an edge server, and the CDF modules playback the requested media contents to the end users under control of the content controller. It can be seen from Fig.1 that the CDN controllers in the multiple layers of CDNs provide the better system redundant capability via a tree network topology, when a certain CDN does not contain the contents desired by the user, the request of the user is redirected from the CDN controller of the CDN to the CDN controller of another CDN. In the network shown in Fig.1, the content ingestion and distribution mechanism are not involved.

Since all the media contents are stored on the central server, such hierarchical content delivery network is not suitable for the IPTV system which can be cost efficiently scaled for extra large deployments. In such the CDN, the media contents are distributed to a plurality of edge servers from the same central server, thus, the central server is prone to be bottleneck of transmission. Moreover, such the CDN is also not flexible enough for the above second challenge.

In addition, peer-to-peer (P2P) technology is also introduced in the content distribution/delivery of the IPTV system, this technology enables the contents to be directly delivered, exchanged and shared between the peer nodes. However, the existing P2P method is suitable for sharing the contents between the end users.

Therefore, the CDN solution that can be cost efficiently scaled for extra large deployments and that can provide a part of platform capability to a third party to realize an IPTV "cloud" model is desired.

### Summary of the Invention

The invention is proposed in view of the above technical problems, and its purpose is to provide an edge content delivery device and a content delivery network for an Internet Protocol TV system, which can solve the expansion and "cloud" problems of the IPTV system and prevent load of the central server from being too heavy.

According to an aspect of the invention, there is provided an edge content delivery device for an Internet Protocol TV (IPTV) system, wherein the IPTV system comprises a central content delivery device and a plurality of edge content delivery devices, the edge content delivery device comprising: a requesting apparatus that requests media contents from other edge content delivery devices; a receiving apparatus that receives media contents distributed by the central content delivery device, receives media contents from the other edge content delivery devices, and receives media contents ingested directly from a content source of a content provider; a storage apparatus that stores the received media contents; a controlling apparatus that manages the stored media contents based on a predetermined content management policy; a deleting apparatus that deletes the media contents from the storage apparatus according to an instruction from the controlling apparatus; and a streaming apparatus that streams the requested media contents to an end user according to an instruction from the controlling apparatus, and in response to a request from another edge content delivery device, delivers the requested media contents to the requesting edge content delivery device.

According to another aspect of the invention, there is provided a content delivery network for an Internet Protocol TV (IPTV) system, which comprises: a central content delivery device; a plurality of the above edge content delivery devices; and an IP network; wherein the central content delivery device distributes media contents to the plurality of edge content delivery devices via the IP network.

### Brief Description of the Drawings

Fig. 1 is a schematic block diagram of an existing content delivery network;
Fig. 2 is a schematic block diagram of the edge content delivery device for the IPTV system according to an embodiment of the invention;
Fig. 3 is an exemplary diagram of the content delivery network of the IPTV system comprising the edge content delivery device shown in Fig.2.

### Detailed Description of the Preferred Embodiments

It is believed that the above and other objects, features and advantages of the invention will become more apparent from the following detailed description of preferred embodiments of the invention taken in conjunction with accompany drawings.

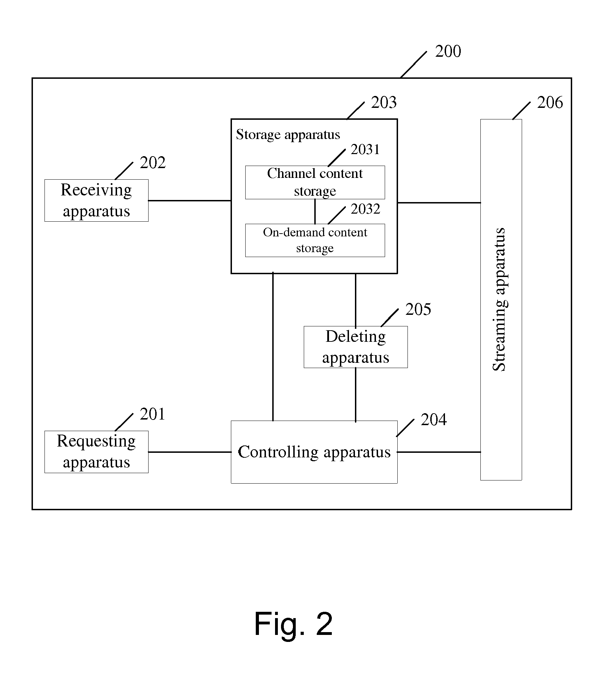

Fig. 2 shows a schematic block diagram of the edge content delivery device 200 for the IPTV system according to an embodiment of the invention. The embodiment will be described in detail below in conjunction with drawings.

In this embodiment, the existing IPTV content delivery is extended into a collaborative content delivery and management, and is combined with the P2P technology to realize the content delivery and share between the edge content delivery devices.

Generally, the IPTV system comprises a content ingestion system, a content management system, a content delivery (distribution) system, and terminals, etc. The content delivery system comprises a central content delivery device, a plurality of edge content delivery devices and an IP network as a delivery network. In the embodiment, the edge content delivery device is improved in order to solve the problems in the art.

As shown in Fig. 2, the edge content delivery device 200 according to the embodiment comprises: the requesting apparatus 201 which requests media contents from the other edge content delivery devices; the receiving apparatus 202 which receives media contents distributed by the central content delivery device, receives media contents from the other edge content delivery devices, and receives media contents ingested directly from a content source of a content provider; the storage apparatus 203 which stores the received media contents; the controlling apparatus 204 which manages the stored media contents based on a predetermined content management policy; the deleting apparatus 205 which deletes the media contents from the storage apparatus 203 according to an instruction from the controlling apparatus 204; and a streaming apparatus 206 which streams the requested media contents to the end user according to an instruction from the controlling apparatus 204, and in response to a request from another edge content delivery device, delivers the requested media contents to the requesting edge content delivery device.

In the edge content delivery device 200, the requesting apparatus 201 requests the desired media contents from other edge content delivery devices in the IPTV system by sending a request message.

The receiving apparatus 202 may receive the media contents from the central content delivery device. In the embodiment, the media contents comprise live TV channel programs and Video on Demand contents. The live TV channel programs may be played live to the end users or replayed to the end users by means of time-shift. The Video on Demand contents may be streamed to the end user based on the end user's demand. The central content delivery device distributes the media contents to the respective edge content delivery devices according to some content management policies. Moreover, when the edge content delivery device 200 uses the requesting apparatus 201 to send a request for the media contents to another edge content delivery device, the receiving apparatus 202 also receives the media contents delivered by the edge content delivery device receiving the request. Further, the receiving apparatus 202 may be used to directly receive the media content from the content source of the content provider. The content provider may be a television media (TV station), a film production company, a news media institution, a remote education institution, a game producer etc. As such, the edge content delivery device 200 may autonomously select the desired media contents, such as the contents with high local popularity or the local media contents, thus bypassing the central content delivery device. Moreover, the media contents need not be stored in the central content delivery device, thereby alleviating the burden of the central content delivery device. The received media content as described above will be stored in the storage apparatus 203.

The storage apparatus 203 may store the media contents distributed by the central content delivery device, the media content delivered by the other edge content delivery devices, and the media contents directly ingested from the content source. Specifically, according to the type of the stored media contents, the storage apparatus 203 further comprises: a channel content storage 2031 for storing the received live TV channel programs to play live or replay time-shift; and an on-demand content storage 2032 for storing the received Video on Demand contents.

The controlling apparatus 204 can manage the media contents obtained by the edge content delivery device 200 according to the predetermined content management policy. The content management policy includes but not limited to the following:
1. Allow the media contents to be delivered between the edge content delivery device 200 and other edge content delivery devices, including obtaining the media contents from other edge content delivery devices and distributing the media content to other edge content delivery devices;
2. Allow the central content delivery device to pull into its storage the media contents directly ingested by the edge content delivery device 200 for centralized storage;
3. Allow the media contents with lowest popularity or the media content that has expired to be deleted, however, if the media content is unique in the IPTV system, the media content will not be deleted.

Specifically, the controlling apparatus 204 may determine whether the media contents stored in the storage apparatus 203 can be deleted according to a predetermined deletion rule, wherein the deletion rule may includes but not limited to:
1) Determine whether the media content is unique throughout the IPTV system, if so, it is determined that the media content cannot be deleted; otherwise, proceed to the following determination;
2) Determine whether the media content has the lowest popularity, if so, it is determined that the media content can be deleted; usually, the popularity of the media content may be determined by the number of times the media content is watched, of course, it will be readily appreciated by a person skilled in the art that other indexes may also be used to indicate popularity;
3) Determine whether the media content is expired, if so, it is determined that the media content can be deleted; it should be noted that this rule is suitable for the media content locally received by the edge content delivery device 200 and directly coming from the content source.

Although some examples about the content management policy and the deletion rule have been given above, the embodiment of the invention is not limited thereto, for a person skilled in the art, other content management policies and deletion rules may also be used.

In the embodiment, the content management policy may be stored centrally in the central content delivery device and may be accessible to the edge content delivery device 200. Alternatively, the content management policy may be stored in the storage apparatus 203, wherein the content management policy is attached to the media content as the metadata.

When the controlling apparatus 204 finds that some media contents may be deleted, it may instruct the deleting apparatus 205 to delete the corresponding media contents from the storage apparatus 203. By periodically deleting the media contents that meets some conditions from the storage apparatus 203, the storage space may be effectively saved.

The streaming apparatus 206, as the apparatus for providing the media contents, may stream the requested media contents to the end user according to the instruction from the controlling apparatus 204. The streaming apparatus 206 has the same function as that of the streaming server in the existing content delivery network, and the related description will be omitted properly.

As described above, for the content management policy that the media content is allowed to be delivered between the different edge content delivery devices, when another edge content delivery device sends the request for media contents to the edge content delivery device 200 of this embodiment, in response to the request, the streaming apparatus 206 delivers the requested media contents to the requesting edge content delivery device under the control of the controlling apparatus 204, thereby realizing the share of the media contents between the different edge content delivery devices.

Further, the edge content delivery device 200 may comprise: a marking apparatus (not shown in the drawing) which marks the received media contents directly ingested from the content source to indicate that the media contents are received locally and would employ the corresponding content management policy. In the present embodiment, marking the media content includes: add a flag and/or an expiration timestamp on the media content.

It can be seen from the above description that the edge content delivery device 200 of the present embodiment is capable of becoming the content source for the content distribution by receiving the media contents directly ingested from the content provider and delivering the media contents to other edge content delivery devices, and is capable of obtaining the media contents from other edge content delivery devices besides the central content delivery device, thereby alleviating, in a certain degree, the burden that the central content delivery device stores all the media contents.

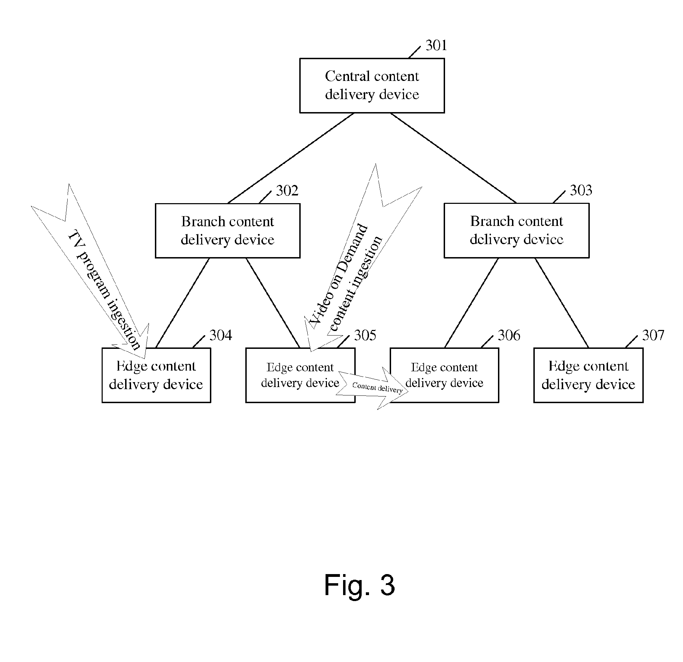

Fig.3 illustratively shows an example of the content delivery system of the IPTV system comprising the edge content delivery device 200 shown in Fig.2. The example will be described in detailed in conjunction with the drawing, wherein for the same parts as those of the previous embodiment, the description will be properly omitted.

As shown in Fig.3, the content delivery system comprises one central content delivery device 301, two branch content delivery devices 302, 303, and four edge content delivery devices 304, 305, 306, 307, which form a tree structure. The central content delivery device 301 is coupled to the branch content delivery devices 302, 303 via the IP network, the branch content delivery device 302 is coupled to the edge content delivery devices 304, 305 via the IP network respectively, and the branch content delivery device 303 is coupled to the edge content delivery devices 306, 307 via the IP network respectively. Moreover, the central content delivery device, branch content delivery devices and edge content delivery devices may be located in the different regions.

In the content delivery system shown in Fig.3, the edge content delivery devices 304, 305, 306, 307 employ the structure of the edge content delivery device shown in Fig.2.

The central content delivery device 301 distributes the media contents to the respective edge servers via the branch content delivery devices 302, 303 according to certain policies. Such content distribution mechanism is the same as the traditional content distribution mechanism.

Each edge content delivery device can be ingested with the media contents directly. For example, the edge content delivery device 304 is ingested with only TV programs and the edge content delivery device 305 is ingested only Video on Demand contents. In this way, the edge content delivery device can bypass the central content delivery device to directly obtain the media contents, and the ingested media contents needs not to be stored in the central content delivery device. Of course, the central content delivery device may grab the media content from the edge content delivery device as needed.

In addition, the media contents may be delivered between the respective edge content delivery devices to realize the content share. For example, when the edge content delivery device 306 wants to obtain the media contents from the edge content delivery device 305, it would sends a request to the edge content delivery device 305, and then the edge content delivery device 305, in response to the request, delivers the requested media contents to the edge content delivery device 306.

The content delivery system shown in Fig. 3 is the distributed content delivery network. Compared with the traditional centralized content delivery system, the media contents are distributed across the network rather than being centrally located in the central content delivery device, so that the burden of the central content delivery device can be alleviated and the distribution of the media content can be more flexible. The contents may be distributed horizontally (between the edge content delivery devices) and vertically (from the central content delivery device to the edge content delivery devices and from the edge content delivery devices to the central content delivery device). Since the media content can be directly ingested into the edge content delivery devices, the extra large deployments of the IPTV system and the "IPTV cloud" model may be realized.

It should be noted that the edge content delivery device of the above embodiments and respective components thereof may be implemented by hardware circuit such as large scale integrated circuit or gate arrays, semiconductors such as logic chip or transistors, or programmable hardware devices such as field programmable gate array, programmable logic device etc, or can be implemented by software executed by various types of processors, or can be implemented by a combination of the above hardware circuit and software.

Although the edge content delivery device and the content delivery system have been described above through some exemplary embodiments, these embodiments are not exhaustive, those skilled in the art can realize various changes and modifications within the spirit and scope of the invention. Therefore, the present invention is not limited to these embodiments, and the scope of the invention is only defined by appended claims.

## Claims

1. An edge content delivery device for an Internet Protocol TV (IPTV) system, wherein the IPTV system comprises a central content delivery device and a plurality of edge content delivery devices, the edge content delivery device comprising:
a requesting apparatus that requests media contents from other edge content delivery devices;
a receiving apparatus that receives media contents distributed by the central content delivery device, receives media contents from the other edge content delivery devices, and receives media contents ingested directly from a content source of a content provider;
a storage apparatus that stores the received media contents;
a controlling apparatus that manages the stored media contents based on a predetermined content management policy;
a deleting apparatus that deletes the media contents from the storage apparatus according to an instruction from the controlling apparatus; and
a streaming apparatus that streams the requested media contents to an end user according to an instruction from the controlling apparatus, and in response to a request from another edge content delivery device, delivers the requested media contents to the requesting edge content delivery device.

2. The edge content delivery device according to claim 1, further comprising: a marking apparatus that marks the received media contents ingested directly from the content source.

3. The edge content delivery device according to claim 1, wherein the content management policy is stored in the central content delivery device and is accessible to the edge content delivery device.

4. The edge content delivery device according to claim 1, wherein the content management policy is stored in the storage apparatus along with the media content, and the content management policy is metadata of the media content.

5. The edge content delivery device according to claim 1, wherein the media contents comprises: live TV channel programs; and Video on Demand contents.

6. The edge content delivery device according to claim 5, wherein the storage apparatus comprises:
a channel content storage that stores the live TV channel programs for time-shift replay; and
an on-demand content storage that stores the Video on Demand contents.

7. A content delivery system for an Internet Protocol TV (IPTV) system, comprising:
a central content delivery device;
a plurality of edge content delivery devices according to claim 1; and
an IP network;
wherein the central content delivery device distributes media contents to the plurality of edge content delivery devices via the IP network.

8. The content delivery system according to claim 7, further comprising:
a plurality of branch content delivery devices, each of which receives the media contents distributed by the central content delivery device and distributes the media contents to the edge content delivery devices coupled thereto.
